# EUROPEAN PATENT APPLICATION

(11) **EP 3 905 289 A1**
(43) Date of publication of application: **03.11.2021**
(21) Application number: 19902134.6
(22) Date of filing: 17.12.2019
(51) Int. Cl.: H01G 9/02, H01G 9/145, H01G 9/15

(54) **SEPARATOR FOR ALUMINUM ELECTROLYTIC CAPACITOR AND ALUMINUM ELECTROLYTIC CAPACITOR**

(30) Priority: 27.12.2018 JP 2018246259
(71) Applicant: Nippon Kodoshi Corporation, Kochi-shi, Kochi 781-0395 (JP)
(72) Inventor: OCHI, Takafumi, Kochi-shi, Kochi 781-0395 (JP); ISHIGAYASUMI, Masaki, Kochi-shi, Kochi 781-0395 (JP); KUMAOKA, Hironori, Kochi-shi, Kochi 781-0395 (JP)
(74) Representative: Betten & Resch
(86) International application number: PCT/JP2019/049319
(87) International publication number: WO 2020/137675

(57) **Abstract**

The purpose of the present invention is to provide a separator for an aluminum electrolytic capacitor and an aluminum electrolytic capacitor, with which it is possible to increase the uniformity of conductive polymers in solid electrolytic capacitors and hybrid electrolytic capacitors, and to achieve a further decrease in the ESR of the capacitor. The purpose is achieved by means of the following configurations: a separator for an aluminum electrolytic capacitor, the separator being interposed between a pair of electrodes and characterized in that the bottom surface of an element obtained by winding the pair of electrodes with the separator interposed therebetween is dipped in an electrolytic solution for an impregnating rate of not more than 50 seconds; or an aluminum electrolytic capacitor including a pair of electrodes and the separator interposed between the pair of electrodes, characterized in that the separator is as noted above, or characterized in that a conductive polymer is used as the cathode material for the pair of electrodes.

## Description

### Technical Field

The present invention relates to a separator for an aluminum electrolytic capacitor interposed between a pair of electrodes, and an aluminum electrolytic capacitor using the separator for an aluminum electrolytic capacitor.

### Background Art

Aluminum electrolytic capacitors are used in many fields such as automotive electric components and electronic devices. Among the aluminum electrolytic capacitors, an aluminum solid electrolytic capacitor (hereinbelow, a solid electrolytic capacitor) using a conductive polymer as a cathode material and a conductive polymer hybrid aluminum electrolytic capacitor (hereinbelow, a hybrid electrolytic capacitor) using both a conductive polymer and an electrolytic solution have lower equivalent series resistance (hereinbelow, ESR) than that of a normal aluminum electrolytic capacitor using only an electrolytic solution as a cathode material, and thus their use ranges have been expanded.

In general, the solid electrolytic capacitor is produced by winding an anode aluminum foil and a cathode aluminum foil with a separator interposed therebetween, impregnating with a polymerization solution of a conductive polymer and polymerizing the anode aluminum foil and the cathode aluminum foil to obtain an element containing the conductive polymer, inserting the element into a case, and sealing the case. Alternatively, the solid electrolytic capacitor is produced by winding an anode aluminum foil and a cathode aluminum foil with a separator interposed therebetween, impregnating with a dispersion of a conductive polymer and drying the anode aluminum foil and the cathode aluminum foil to obtain an element containing the conductive polymer, inserting the element into a case, and sealing the case.

The hybrid electrolytic capacitor is produced by further impregnating an element containing a conductive polymer with an electrolytic solution, inserting the element into a case, and sealing the case.

While a conduction mechanism of the normal aluminum electrolytic capacitor using only an electrolytic solution is ion conduction, a conduction mechanism of the solid electrolytic capacitor and the hybrid electrolytic capacitor containing a conductive polymer is electron conduction. Therefore, the solid electrolytic capacitor and the hybrid electrolytic capacitor have higher responsiveness and lower ESR than the normal aluminum electrolytic capacitor.

The separator used in the solid electrolytic capacitor and the hybrid electrolytic capacitor is required to isolate both electrodes from each other to prevent a short circuit failure and to retain the conductive polymer.

As a separator for a solid electrolytic capacitor and a hybrid electrolytic capacitor, techniques described in Patent Literature 1 to 3 have been disclosed, for example.

A separator described in Patent Literature 1 is a separator containing a fiber made of a semi-aromatic polyamide resin and having a great affinity for a conductive polymer, and the use of this separator can improve the electrolyte retention property and improve the ESR characteristics of the solid electrolytic capacitor.

Patent Literature 2 discloses a separator containing a non-fibrillated organic fiber and a fibrillated polymer and having a high water absorption rate, and a technique for decreasing the ESR of the solid electrolytic capacitor by using the separator.

A separator in Patent Literature 3 is a separator in which the compressed impregnating rate of the separator is improved. By using this separator, the ESR of the solid electrolytic capacitor can be decreased, and the electrostatic capacitance can be improved.

### Citation List

### Patent Literature

Patent Literature 1: JP 2004-165593 A
Patent Literature 2: JP 2004-235293 A
Patent Literature 3: JP 6411620 B1

A separator in Patent Literature 1 is a separator containing a fiber made of a semi-aromatic polyamide resin and having a great affinity for a conductive polymer, and the use of this separator can improve the electrolyte retention property and improve the ESR characteristics of the solid electrolytic capacitor.

Patent Literature 2 discloses a separator containing a non-fibrillated organic fiber and a fibrillated polymer and having a high water absorption rate, and a technique for decreasing the ESR of the solid electrolytic capacitor by using the separator.

A separator in Patent Literature 3 is a separator in which the compressed impregnating rate of the separator is improved. By using this separator, the ESR of the solid electrolytic capacitor can be decreased, and the electrostatic capacitance can be improved.

### Summary of Invention

### Technical Problem

Capacitors including solid electrolytic capacitors and hybrid electrolytic capacitors are always required to have decreased ESR and improved electrostatic capacitance. However, even with use of the separators in Patent Literature 1 to 3, it is difficult to decrease the ESR of the solid electrolytic capacitor and the hybrid electrolytic capacitor to a certain level or higher. Probably, this is mainly because of the following reasons.

The conventional separators having a high water absorption rate as in Patent Literature 2 and Patent Literature 3 are excellent in absorption of a solvent of a polymerization solution of a conductive polymer or absorption of a dispersion medium of a dispersion of a conductive polymer but are not necessarily excellent in impregnating property of the conductive polymer itself.
The reason for this is that, when the electrode foils and the separator are wound and impregnated with the polymerization solution or the dispersion of the conductive polymer, there is a case in which the solute or the dispersoid is not absorbed while the solvent of the polymerization solution of the conductive polymer or the dispersion medium of the dispersion of the conductive polymer is absorbed as in paper chromatography.

Further, in a case in which when the solvent (dispersion medium) and the solute (dispersoid) are separated as described above, the conductive polymer is non-uniformly distributed inside the capacitor element, and the uniformity of the conductive polymer decreases.

Also, in the case of the separator that has a great affinity for the conductive polymer as in Patent Literature 1, separation of the solvent (dispersion medium) and the solute (dispersoid) hardly occurs, but impregnation itself of the polymerization solution or the dispersion of the conductive polymer, which is a high-viscosity liquid, is difficult, and non-uniform distribution of the conductive polymer inside the capacitor element may occur.

As a result of various studies conducted by the present inventors, it has been found that, in the solid electrolytic capacitor, ESR cannot be decreased because the liquid retention amount is non-uniformly distributed inside the capacitor element before polymerization of the polymerization solution of the conductive polymer or before drying of the dispersion of the conductive polymer, and the conductive polymer after polymerization or drying is non-uniform.

The present invention has been made in view of the above problems, and the purpose of the present invention is to provide a separator for an aluminum electrolytic capacitor and an aluminum electrolytic capacitor, with which it is possible to increase the uniformity of conductive polymers in solid electrolytic capacitors and hybrid electrolytic capacitors, and to achieve a further decrease in the ESR of the capacitor.

### Solution to Problem

In order to achieve the above purpose, a separator for an aluminum electrolytic capacitor according to the present invention has the following configurations, for example.

That is, a separator for an aluminum electrolytic capacitor is interposed between a pair of electrodes and is characterized in that the bottom surface of an element obtained by winding the pair of electrodes with the separator interposed therebetween is dipped in an electrolytic solution for an impregnating rate of not more than 50 seconds.

Alternatively, an aluminum electrolytic capacitor includes a pair of electrodes, and a separator interposed between the pair of electrodes and is characterized in that the separator is as noted above.

The aluminum electrolytic capacitor is characterized in that a conductive polymer is used as the cathode material for the pair of electrodes.

### Advantageous Effects of Invention

According to the present invention, it is possible to provide a separator for an aluminum electrolytic capacitor and an aluminum electrolytic capacitor that achieve a decrease in the ESR.

### Description of Embodiments

Hereinbelow, an embodiment of the present invention will be described in detail.

A separator according to the present embodiment is a separator having an impregnating rate of not more than 50 seconds. The impregnating rate in the present embodiment refers to time until the bottom surface of an element having a diameter of 6 mm and a height of 18 mm, obtained by winding an anode foil and a cathode foil with a separator interposed therebetween, is dipped in an electrolytic solution, and the electrostatic capacitance measured at 120 Hz and 20°C using an LCR meter reaches 90% or more of a rated electrostatic capacitance.

In the present embodiment, an element obtained by winding an anode foil having a width of 15 mm and a thickness of 100 µm and a cathode foil having a width of 15 mm and a thickness of 50 µm with a separator having a width of 18 mm interposed therebetween was used, and time until the electrostatic capacitance reached 90% or more of a rated electrostatic capacitance using a 25 mass% γ-butyrolactone solution of imidazolium phthalate salt was measured.

Note that the widths and thicknesses of the anode foil and the cathode foil are not particularly limited as long as the size of the element obtained by winding is 6 mm in diameter and 18 mm in height. Also, the electrolyte used for the electrolytic solution is not limited to the imidazolium phthalate salt, and an imidazolium salt modified with an ethyl group or a methyl group, an imidazolium salt in which a double bond is cleaved, or other divalent carboxylate may be used.

The impregnating rate in the present embodiment is obtained by directly measuring the impregnating property after the formation of the element rather than the impregnating property of the separator alone, and the impregnating property in the actual capacitor manufacturing process can be directly measured.

In a case in which the separator has an impregnating rate of not more than 50 seconds, the impregnating property and retention property of the conductive polymer can be enhanced, and the ESR of the capacitor can be decreased.

In a case in which the impregnating rate exceeds 50 seconds, the impregnating property is poor, the retention amount of the conductive polymer is non-uniformly distributed inside the capacitor element, and the ESR may not be decreased. Also, in a case in which the separator is used in a hybrid electrolytic capacitor, the electrolytic solution has low retention property, the electrolytic solution may thus fall in the direction of gravity when the hybrid electrolytic capacitor is used, and the electrostatic capacitance may decrease.

The higher the impregnating rate, the better. However, in consideration of the handleability and the like of the separator, it is difficult to set the impregnating rate to less than 5 seconds, and the lower limit is about 5 seconds.

A fiber used for the separator according to the present embodiment is not particularly limited as long as the separator satisfies the above-mentioned impregnating rate and has sufficient strength and chemical resistance as a separator for a solid electrolytic capacitor or a hybrid electrolytic capacitor.

Examples of the fiber used for the separator according to the present embodiment include a cellulose fiber and a synthetic fiber.

The cellulose fiber includes a natural cellulose fiber and a regenerated cellulose fiber, and can be used without particular limitation. In addition, the cellulose fiber may be one obtained by purifying a natural cellulose fiber or one obtained by mercerizing a natural cellulose fiber. Examples of the natural cellulose fiber include Manila hemp, sisal hemp, jute, kenaf, cotton linters, esparto, softwood, and hardwood, but are not limited thereto. The cellulose fiber may be beaten as long as the above-mentioned impregnating rate of 5 to 50 seconds can be satisfied.

Examples of the synthetic fiber include a nylon fiber, a polyester fiber, an acrylic fiber, and an aramid fiber, and these can be used without particular limitation. In addition, the synthetic fiber may be a fibrillated fiber or a non-fibrillated fiber, and these fibers may be used in combination. Among them, the nylon fiber is preferable from the viewpoint of affinity for the polymerization solution or dispersion of the conductive polymer.

The cellulose fiber has a great affinity for a solvent of a polymerization solution or a dispersion of a conductive polymer, easily causes an impregnating rate to be high, and easily causes the retention property of the polymerization solution or the dispersion of the conductive polymer to be improved. The synthetic fiber easily forms a bulky sheet and can increase the impregnating rate. In addition, since the synthetic fiber has greater chemical resistance than the cellulose, the synthetic fiber does not inhibit polymerization of the conductive polymer and is less deteriorated by the polymerization solution or the dispersion of the conductive polymer.

For example, by using a cellulose fiber having an average fiber length of 0.5 to 2.0 mm and a non-fibrillated synthetic fiber, the impregnating rate of the separator can be satisfied.

However, the fiber for the separator is not limited to the cellulose fiber having the above-mentioned average fiber length and non-fibrillated synthetic fiber as long as the above-mentioned range of the impregnating rate according to the present embodiment can be satisfied. For example, a cellulose fiber having an average fiber length of 0.4 mm or a fibrillated synthetic fiber may be used by reducing the content of these fibers in the separator.

The thickness and density of the separator according to the present embodiment are not particularly limited.
The thickness is generally 20 to 100 µm, and the density is generally about 0.20 to 0.60 g/cm³ in consideration of the strength, that is, the handleability and the like at the time of use.

In the embodiment of the present invention, a wet nonwoven fabric formed using a papermaking method is employed as the separator. The papermaking method for the separator is not particularly limited as long as the impregnating rate can be satisfied. Papermaking methods such as Fourdrinier papermaking, tanmo papermaking, and cylinder papermaking can be used, and a plurality of layers formed by these papermaking methods may be combined.

Also, in papermaking, additives such as a dispersant, an antifoaming agent, and a paper strength additive may be added as long as the content of impurities does not affect the separator for the capacitor.

Further, after the paper layer is formed, processing such as paper strength additioning processing, lyophilic processing, calendering processing, and embossing processing may be performed.

In the aluminum electrolytic capacitor according to the present embodiment, the separator having the above configuration is used as the separator, the separator is interposed between the pair of electrodes, and the conductive polymer is used as the cathode material.

### [Method for Measuring Characteristics of Separator and Aluminum Electrolytic Capacitor]

Specific measurement of characteristics of the separator and the aluminum electrolytic capacitor according to the present embodiment was performed under the following conditions and methods.

### [Thickness]

The thickness of the separator was measured by a method in which the separator was folded into ten sheets in "5.1.3 Case of measuring thickness by folding paper" using a micrometer in "5.1.1 Measuring instrument and measuring method, a) Case of using outside micrometer" defined in "JIS C 2300-2 'Cellulosic papers for electrical purposes-Part 2: Methods of test' 5.1 Thickness".

### [Density]

The density of the separator in a bone dry condition was measured by the method defined in Method B in "JIS C 2300-2 'Cellulosic papers for electrical purposes-Part 2: Methods of test' 7.0A Density".

### [Impregnating Rate]

The bottom surface of an element having a diameter of 6 mm and a height of 18 mm obtained by winding an anode foil having a width of 15 mm and a thickness of 100 µm and a cathode foil having a width of 15 mm and a thickness of 50 µm with a separator having a width of 18 mm interposed therebetween was dipped to a depth of 3 mm in a 25 mass% γ-butyrolactone solution of 1-ethyl-2,3-dimethyl-4,5-dihydroimidazolium = hydrogen = phthalate, and time until the electrostatic capacitance measured at 120 Hz and 20°C reached 90% or more of the rated electrostatic capacitance was measured using an LCR meter.

### [Average Fiber Length]

The average fiber length is a value of a lengthweighted average fiber length of Contour length (center line fiber length) measured using Kajaani Fiberlab Ver. 4 (manufactured by Metso Automation) in accordance with JIS P 8226 -2 'Pulps-Determination of fibre length by automated optical analysis-Part 2: Unpolarized light method' (ISO16065-2 'Pulps-Determination of Fibre length by automated optical analysis-Part2: Unpolarized light method').

### [ESR]

The ESR of the prepared capacitor was measured using an LCR meter under conditions of a temperature of 20°C and a frequency of 100 kHz.

### [Electrostatic Capacitance]

The electrostatic capacitance of the prepared capacitor was measured using an LCR meter under the conditions of a temperature of 20°C and a frequency of 120 Hz.

### [Capacitance Maintenance Rate]

The capacitance maintenance rate was measured only for the hybrid electrolytic capacitor.

The electrostatic capacitance of the hybrid electrolytic capacitor after centrifugation at a centrifugal acceleration of 1000G for five minutes using a centrifuge was divided by the electrostatic capacitance before centrifugation, and the electrostatic capacitance was obtained as a percentage.

### [Production of Solid electrolytic capacitor and Hybrid Electrolytic Capacitor]

A separator was interposed between an anode foil and a cathode foil, the anode foil and the cathode foil were wound, after a re-forming treatment, the capacitor element was impregnated with a conductive polymer dispersion and then dried, and the capacitor element was inserted into a case and sealed to prepare a solid electrolytic capacitor having a rated voltage of 50V, a diameter of 8.0 mm, and a height of 10.0 mm.

A hybrid electrolytic capacitor having a rated voltage of 80V, a diameter of 8.0 mm, and a height of 10.0 mm was produced in a similar manner to that of the solid electrolytic capacitor except that the hybrid electrolytic capacitor was impregnated with an electrolytic solution before being inserted into a case.

Hereinbelow, specific examples of the solid electrolytic capacitor and the hybrid electrolytic capacitor according to the embodiment of the present invention, a comparative example, and conventional examples will be described in detail.

### [Example 1]

15 mass% of cotton linter pulp, 25 mass% of jute pulp, and 35 mass% of nylon fiber were mixed and subjected to cylinder papermaking to obtain a separator of Example 1.

The cellulose fibers of this separator had an average fiber length of 1.2 mm, a thickness of 60 µm, a density of 0.55 g/cm³, and an impregnating rate of 49 seconds.

### [Example 2]

30 mass% of mercerized bamboo pulp, 15 mass% of sisal hemp pulp, and 55 mass% of nylon fiber were mixed and subjected to cylinder papermaking to obtain a separator of Example 2.

The cellulose fibers of this separator had an average fiber length of 1.3 mm, a thickness of 20 µm, a density of 0.40 g/cm³, and an impregnating rate of 38 seconds.

### [Example 3]

30 mass% of cotton pulp, 30 mass% of beaten solvent-spun rayon fiber, and 40 mass% of unbeaten rayon fiber having a fiber length of 4 mm were mixed and subjected to cylinder papermaking to obtain a separator of Example 3.

The cellulose fibers of this separator had an average fiber length of 2.4 mm, a thickness of 90 µm, a density of 0.35 g/cm³, and an impregnating rate of 12 seconds.

### [Example 4]

10 mass% of cotton pulp, 10 mass% of kenaf pulp, and 80 mass% of acrylic fiber were mixed and subjected to cylinder papermaking to obtain a separator of Example 4.

The cellulose fibers of this separator had an average fiber length of 1.1 mm, a thickness of 40 µm, a density of 0.22 g/cm³, and an impregnating rate of 5 seconds.

### [Reference Example]

20 mass% of cotton pulp, 40 mass% of polyester fiber, and 40 mass% of acrylic fiber were mixed and subjected to cylinder papermaking to obtain a separator of Reference Example.

The cellulose fibers of this separator had an average fiber length of 1.4 mm, a thickness of 40 µm, a density of 0.17 g/cm³, and an impregnating rate of 2 seconds.

### [Comparative Example]

60 mass% of Manila hemp pulp and 40 mass% of sisal hemp pulp were mixed and subjected to cylinder papermaking to obtain a separator of Comparative Example.

The cellulose fibers of this separator had an average fiber length of 2.3 mm, a thickness of 30 µm, a density of 0.65 g/cm³, and an impregnating rate of 55 seconds.

### [Conventional Example 1]

With reference to Example 3 of Patent Literature 2, 5 mass% of cotton pulp, 30 mass% of fibrillated aramid fiber, and 65 mass% of polyester fiber were mixed and subjected to cylinder papermaking to obtain a separator of Conventional Example 1.

The cellulose fibers of this separator had an average fiber length of 0.4 mm, a thickness of 45 µm, a density of 0.38 g/cm³, and an impregnating rate of 61 seconds.

### [Conventional Example 2]

With reference to Example 7 of Patent Literature 3, 30 mass% of cotton pulp, 30 mass% of Manila hemp pulp, and 40 mass% of fibrillated acrylic fiber were mixed and subjected to cylinder papermaking to obtain a separator of Conventional Example 2.

The cellulose fibers of this separator had an average fiber length of 2.1 mm, a thickness of 35 µm, a density of 0.28 g/cm³, and an impregnating rate of 54 seconds.

Solid electrolytic capacitors and hybrid electrolytic capacitors were produced as aluminum electrolytic capacitors produced using the separators of the above Examples, Reference Example, Comparative Example, and Conventional Examples.

Hereinbelow, the solid electrolytic capacitors and the hybrid electrolytic capacitors using the separators of Examples, Reference Example, Comparative Example, and Conventional Examples will be described.

### [Example 1]

The solid electrolytic capacitor using the separator of Example 1 had an electrostatic capacitance of 48 µF and an ESR of 26 mΩ. The hybrid electrolytic capacitor using the separator of Example 1 had an electrostatic capacitance of 40 µF, a capacitance maintenance rate of 91%, and an ESR of 32 mΩ.

### [Example 2]

The solid electrolytic capacitor using the separator of Example 2 had an electrostatic capacitance of 47 µF and an ESR of 26 mΩ. The hybrid electrolytic capacitor using the separator of Example 2 had an electrostatic capacitance of 40 µF, a capacitance maintenance rate of 93%, and an ESR of 33 mΩ.

### [Example 3]

The solid electrolytic capacitor using the separator of Example 3 had an electrostatic capacitance of 45 µF and an ESR of 28 mΩ. The hybrid electrolytic capacitor using the separator of Example 3 had an electrostatic capacitance of 37 µF, a capacitance maintenance rate of 95%, and an ESR of 35 mΩ.

### [Example 4]

The solid electrolytic capacitor using the separator of Example 4 had an electrostatic capacitance of 44 µF and an ESR of 29 mΩ. The hybrid electrolytic capacitor using the separator of Example 4 had an electrostatic capacitance of 36 µF, a capacitance maintenance rate of 96%, and an ESR of 36 mΩ.

### [Reference Example]

An attempt was made to produce a capacitor element using the separator of Reference Example, but the strength was low, and breakage of the separator frequently occurred during the production of the element. Therefore, it was not possible to produce a capacitor element for both the solid electrolytic capacitor and the hybrid electrolytic capacitor.

### [Comparative Example]

The solid electrolytic capacitor using the separator of Comparative Example had an electrostatic capacitance of 38 µF and an ESR of 40 mΩ. The hybrid electrolytic capacitor using the separator of Comparative Example had an electrostatic capacitance of 28 µF, a capacitance maintenance rate of 80%, and an ESR of 45 mΩ.

### [Conventional Example 1]

The solid electrolytic capacitor using the separator of Conventional Example 1 had an electrostatic capacitance of 40 µF and an ESR of 37 mΩ. The hybrid electrolytic capacitor using the separator of Conventional Example 1 had an electrostatic capacitance of 29 µF, a capacitance maintenance rate of 82%, and an ESR of 40 mΩ.

### [Conventional Example 2]

The solid electrolytic capacitor using the separator of Conventional Example 2 had an electrostatic capacitance of 55 µF and an ESR of 33 mΩ. The hybrid electrolytic capacitor using the separator of Conventional Example 2 had an electrostatic capacitance of 32 µF, a capacitance maintenance rate of 86%, and an ESR of 32 mΩ.

**[Table 1]**

| | CONTENT | THICKNESS | DENSITY | IMPREGNATING RATE | SOLID ELECTROLYTIC HYBRID ELECTROLYTIC CAPACITOR | | | | |
|---|---|---|---|---|---|---|---|---|---|
| | | | | | ELECTROSTATIC CAPACITANCE | ESR | ELECTROSTATIC CAPACITANCE | CAPACITANCE MAINTENANCE RATE | ESR |
| | MASS % | µ m | g/cm³ | SECOND | µ F | Ω | µ F | % | Ω |
| EXAMPLE 1 | COTTON 15 | 60 | 0.55 | 49 | 48 | 26 | 40 | 91 | 32 |
| | JUTE 25 | | | | | | | | |
| | NYLON 35 | | | | | | | | |
| EXAMPLE 2 | MERCERIZED 30 BAMBOO | 20 | 0.40 | 38 | 47 | 26 | 40 | 93 | 33 |
| | SISAL HEMP 15 | | | | | | | | |
| | NYLON 55 | | | | | | | | |
| EXAMPLE 3 | COTTON 30 | 90 | 0.35 | 12 | 45 | 28 | 37 | 95 | 35 |
| | BEATEN SOLVENT-SPUN 30 RAYON | | | | | | | | |
| | UNBEATEN 40 RAYON | | | | | | | | |
| EXAMPLE 4 | COTTON 10 | 40 | 0.22 | 5 | 44 | 29 | 36 | 96 | 36 |
| | KENAF 10 | | | | | | | | |
| | ACRYLIC 80 | | | | | | | | |
| REFERENCE EXAMPLE | COTTON 20 | 40 | 0.17 | 2 | - | - | - | - | - |
| | POLYESTER 40 | | | | | | | | |
| | ACRYLIC 40 | | | | | | | | |
| COMPARATIVE EXAMPLE | MANILA HEMP 60 | 30 | 0.65 | 55 | 38 | 40 | 28 | 80 | 45 |
| | SISAL HEMP 40 | | | | | | | | |
| CONVENTIONAL EXAMPLE 1 | COTTON 5 | 45 | 0.38 | 61 | 40 | 37 | 29 | 82 | 40 |
| | FIBRILLATED 30 ARAMID | | | | | | | | |
| | POLYESTER 65 | | | | | | | | |
| CONVENTIONAL EXAMPLE 2 | COTTON 30 | 35 | 0.28 | 54 | 55 | 33 | 32 | 86 | 32 |
| | MANILA HEMP 30 | | | | | | | | |
| | FIBRILLATED 40 ACRYLIC | | | | | | | | |

In the solid electrolytic capacitor and the hybrid electrolytic capacitor using the separator of each Example, the electrostatic capacitance is improved by 10% or more, and the ESR is also decreased by 10% or more as compared with the solid electrolytic capacitor and the hybrid electrolytic capacitor of each Conventional Example. In addition, the capacitance maintenance rate of the hybrid electrolytic capacitor of each Example is also as good as 90% or more.

From the comparison of the respective Examples, Reference Example, Comparative Example, and Conventional Examples, by setting the impregnating rate of the separator to not more than 50 seconds, the electrostatic capacitance and the ESR of the solid electrolytic capacitor and the hybrid electrolytic capacitor can be improved, and the capacitance maintenance rate of the hybrid electrolytic capacitor can also be improved.

As described above, according to the embodiment of the present invention, the impregnating rate of the conductive polymer is high, the retention property is high, and the retention property does not decrease with time. Therefore, it is possible to suppress non-uniform distribution of the liquid retention amount inside the capacitor element before polymerization of the polymerization solution of the conductive polymer or before drying of the dispersion of the conductive polymer, and to decrease the ESR of the capacitor.

In addition, in a case in which this separator is used for a hybrid electrolytic capacitor, the retention property of the electrolytic solution is high, and the retention property does not decrease with time. Therefore, a decrease in electrostatic capacitance caused by the electrolytic solution falling in the direction of gravity when the hybrid electrolytic capacitor is used can also be suppressed.

## Claims

1. A separator for an aluminum electrolytic capacitor, the separator being interposed between a pair of electrodes, **characterized in that**
a bottom surface of an element obtained by winding the pair of electrodes with the separator interposed therebetween is dipped in an electrolytic solution for an impregnating rate of not more than 50 seconds.

2. An aluminum electrolytic capacitor comprising: a pair of electrodes; and a separator interposed between the pair of electrodes, **characterized in that**
the separator is as noted in claim 1.

3. The aluminum electrolytic capacitor according to claim 2, **characterized in that** a conductive polymer is used as the cathode material for the pair of electrodes.
